# EUROPÄISCHE PATENTANMELDUNG

(11) **EP 1 255 070 A1**
(43) Veröffentlichungstag der Anmeldung: **06.11.2002**
(21) Anmeldenummer: 02008250.9
(22) Anmeldetag: 18.04.2002
(51) Int. Cl.: F16L 41/08

(54) **Vorrichtung zum Anschluss einer pneumatischen Leitung**

(30) Priorität: 27.04.2001 DE 10120710
(71) Anmelder: ROBERT BOSCH GMBH, 70442 Stuttgart (DE)
(72) Erfinder: Kulmann, Erwin, 71706 Markgroeningen (DE)
(74) Vertreter: Preuss, Udo, Dipl.-Ing.

(57) **Zusammenfassung**

Es wird eine Vorrichtung zum Anschluß mindestens einer pneumatischen Leitung an eine pneumatische Baueinheit, insbesondere an ein Pneumatikventil, vorgeschlagen, umfassend mindestens ein in einem Aufnahmeraum (5, 6) angeordnetes Einpreßteil (10, 11), welches einen sich in einem Anschlußgehäuseteil (2) verhakenden Ringbund (17) aufweist. Das Einpreßteil (10, 11) ist zum Anschluß einer Schraubverbindung ausgebildet und umfaßt eine Verdrehsicherung (12) (Figur 3).

## Beschreibung

### Stand der Technik

Die Erfindung geht von einer Vorrichtung zum Anschluß mindestens einer pneumatischen Leitung an eine pneumatische Baueinheit, insbesondere an ein Pneumatikventil, gemäß der im Oberbegriff des Patentanspruches 1 näher definierten Art aus.

Eine derartige Vorrichtung ist aus der Praxis bekannt und beispielsweise als Adapterplatte eines Pneumatikventils ausgebildet, das in Verbindung mit Spann- oder Haltevorrichtungen einsetzbar ist.

Eine bekannte Adapterplatte umfaßt bzw. bildet ein als Anschlußgehäuseteil dienendes Kunststoffgehäuse, in welches beispielsweise zwei umspritzte Einlegeteile in entsprechenden Aufnahmeräumen angeordnet sind. Die Einlegeteile, welche aus Messing gefertigt sein können, weisen jeweils ein Innengewinde auf, in welches ein Schraubverbindungsstück einer pneumatischen Leitung eindrehbar ist. Die Abdichtung im Bereich der Einlegeteile erfolgt jeweils mittels eines O-Rings. Des weiteren sind die Einlegeteile verdrehgesichert, und zwar über eine am äußeren Umfang des jeweiligen Einpreßteiles ausgebildete Kerbverzahnung, welche sich verhakend in das aus Kunststoff gefertigte Anschlußgehäuseteil eingreift. Im Bereich der Kerbverzahnung können Dichtigkeitsprobleme auftreten.

Es ist auch bekannt, eine Adapterplatte mit einem als Anschlußstück dienenden Einpreßteil zu versehen, das als Steckanschlußbuchse ausgebildet ist und am Umfang einen Ringbund hat, der sich in der Adapterplatte verhakt und eine Dichtfunktion hat.

### Vorteile der Erfindung

Die erfindungsgemäße Vorrichtung zum Anschluß mindestens einer pneumatischen Leitung an eine pneumatische Baueinheit, insbesondere an ein Pneumatikventil, mit den Merkmalen nach dem Oberbegriff des Patentanspruches 1, bei welcher das Einpreßteil zum Anschluß einer Schraubverbindung ausgebildet ist sowie eine Verdrehsicherung umfaßt, hat gegenüber dem oben beschriebenen Stand der Technik den Vorteil, daß eine Gewindebuchse als Einpreßteil einsetzbar ist, welches auf einfache Weise in dem Aufnahmeraum fixiert werden kann. Die Dichtigkeit im Bereich des Einpreßteils ist ohne zusätzliche Bauteile aufgrund des sich in dem Anschlußgehäuseteil verhakenden Ringbunds gewährleistet. Ein Verdrehen des Einpreßteils beim Eindrehen eines Anschlußstücks einer pneumatischen Leitung in das Einpreßteil ist aufgrund der Verdrehsicherung ausgeschlossen.

Nach einer vorteilhaften Ausführungsform der Vorrichtung nach der Erfindung umfaßt die Verdrehsicherung einen gerändelten Umfang des Einpreßteils. Eine Rändelung ist kostengünstig herzustellen und vorteilhaft scharfkantig ausgebildet, so daß sie sich auf einfache Weise in einer angrenzenden Wandung des Anschlußgehäuseteils verhaken kann.

Insbesondere wenn die Verdrehsicherung einen gerändelten Umfang des Einpreßteils umfaßt, ist an dem Einpreßteil vorteilhaft eine Ringnut ausgebildet, welche sich an die radial ausgerichtete Rändelung anschließt. Diese Ringnut bzw. Rille, die der Rändelung vorgelagert ist, dient zur Aufnahme von beim Einpressen des Einpreßteils anfallenden Späne.

Die Verdrehsicherung kann alternativ oder zusätzlich eine am Umfang des Einpreßteils ausgebildete, ebene Fläche umfassen, welche an einer korrespondierenden Stützfläche anliegt. Beim Eindrehen eines Anschlußstücks einer pneumatischen Leitung in das Einpreßteil kann sich letzteres so an der Stützfläche abstützen. Eine Verdrehung des Einpreßteils aufgrund des beim Eindrehen des Anschlußstücks auf das Einpreßteil ausgeübten Drehmoments ist ausgeschlossen.

Wenn zwei Einpreßteile nebeneinander in dem Anschlußgehäuseteil angeordnet sind, kann die korrespondierende Stützfläche an dem zweiten Einpreßteil ausgebildet sein. Auch das zweite Einpreßteil, welches ebenfalls eine Gewindebuchse darstellen kann, ist damit über die an dem ersten Einpreßteil ausgebildete, ebene Fläche verdrehgesichert. Die beiden als Gewindebuchse ausgebildeten Einpreßteile können sich mithin beim Eindrehen eines Anschlußstücks aneinander abstützen.

Eine bevorzugte Ausführungsform der Vorrichtung nach der Erfindung umfaßt zwei Einpreßteile, die mittels einer Platte verdrehgesichert sind, welche zwei von jeweils einem Einpreßteil durchgriffene Durchbrüche hat, an welchen jeweils mindestens eine Stützfläche für eine korrespondierende Anlagefläche des jeweiligen Einpreßteils ausgebildet ist, so daß jeweils das eine Einpreßteil mittels des anderen Einpreßteils verdrehgesichert ist. Eine derartige Platte ist vorteilhaft zwischen dem Anschlußgehäuseteil und den beiden Einpreßteilen angeordnet, wobei die beiden Durchbrüche jeweils von einem Einpreßteil durchgriffen sind. Die Durchbrüche haben beispielsweise jeweils vier Stützflächen, an welchen sich vier korrespondierende Anlageflächen eines Einpreßteils abstützen. Die Platte kann aus Metall gefertigt sein, so daß Schraubanschlußstücke einer pneumatischen Leitung mit einem hohen Drehmoment in das Einpreßteil eingedreht werden können.

Um das Einpreßteil in der jeweils zugeordneten Ausnehmung auf einfache Weise einpressen zu können, weist der mindestens eine Ringbund vorteilhaft mindestens eine Einpreßschräge auf.

An die Einpreßschräge schließt sich vorteilhaft an der Einpreßrichtung abgewandten Seite eine im wesentlichen radial ausgerichtete Ringfläche an, so daß ein Verhaken des Einpreßteils in dem Anschlußgehäuseteil gewährleistet ist.

Um ein Einpressen des Einpreßteils ohne wesentliche Abschabung von Material zu gewährleisten, ist an dem Einpreßteil vorteilhaft eine abgerundete Kante ausgebildet, die einen Übergang zwischen der Einpreßschräge und der radial ausgerichteten Ringfläche bildet.

Das Einpreßteil ist beispielsweise aus Messing gefertigt, kann aber auch aus jedem anderen geeigneten Werkstoff, wie Stahl, bestehen.

Das Anschlußgehäuseteil kann zumindest teilweise aus Kunststoff gefertigt sein. Es ist auch denkbar, daß das Anschlußgehäuseteil beispielsweise aus Aluminium oder einem anderen geeigneten metallischen oder nicht-metallischen Werkstoff gefertigt ist.

Weitere Vorteile und vorteilhafte Weiterbildungen des Gegenstandes nach der Erfindung ergeben sich aus der Beschreibung, der Zeichnung und den Patentansprüchen.

### Zeichnung

Drei Ausführungsbeispiele der Vorrichtung nach der Erfindung sind in der Zeichnung schematisch vereinfacht dargestellt und werden in der nachfolgenden Beschreibung näher erläutert. Es zeigen
Figur 1 eine als Adapterplatte ausgebildete Vorrichtung zum Anschluß zweier pneumatischer Leitungen;
Figur 2 eine Stirnansicht der Vorrichtung nach Figur 1;
Figur 3 einen Schnitt durch die Vorrichtung nach Figur 1 entlang der Linie III-III in Figur 2;
Figur 4 eine Stirnansicht einer Einpreßbuchse;
Figur 5 einen Schnitt durch die Einpreßbuchse nach Figur 4 entlang der Linie V-V in Figur 4;
Figur 6 eine Platte zur Verdrehsicherung zweier Einpreßbuchsen;
Figur 7 einen Schnitt durch eine zweite Ausführungsform in einer Figur 3 entsprechenden Darstellung;
Figur 8 einen Schnitt durch eine Einpreßbuchse der Vorrichtung nach Figur 7 mit einer Rändelung;
Figur 9 einen Schnitt durch die Einpreßbuchse nach Figur 8 entlang der Linie IX-IX in Figur 8;
Figur 10 eine Stirnansicht einer dritten Ausführungsform in einer Figur 2 entsprechenden Darstellung;
Figur 11 einen Schnitt durch die Vorrichtung nach Figur 10 entlang der Linie XI-XI in Figur 10; und
Figur 12 einen Längsschnitt durch eine Einpreßbuchse der Vorrichtung nach Figur 10 in einer vergrößerten Darstellung.

### Beschreibung der Ausführungsbeispiele

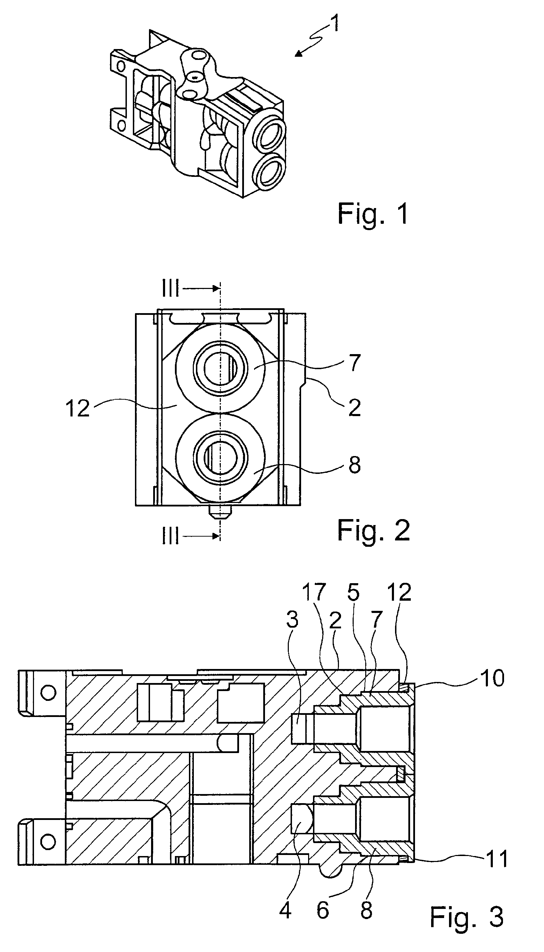

In den Figuren 1 bis 6 ist eine Adapterplatte 1 eines nicht näher dargestellten Pneumatikventils dargestellt, die zum Anschluß zweier pneumatischer Leitungen dient.

Die Adapterplatte 1 umfaßt ein aus Kunststoff gefertigtes Gehäuse 2, das als Anschlußgehäuseteil dient und in dem zwei Kanäle 3 und 4 ausgebildet sind, an die sich jeweils ein Aufnahmeraum 5 bzw. 6 anschließt, welcher zur Aufnahme von jeweils einer als Einpreßteil ausgebildeten Gewindebuchse 7 bzw. 8 dient. Die Gewindebuchsen 7 und 8 dienen zum Eindrehen jeweils einer Schraubverbindung einer pneumatischen Leitung und weisen daher ein Innengewinde 9 auf.

Die Gewindebuchsen 7 und 8 weisen des weiteren jeweils einen bundartigen Abschluß 10 bzw. 11 auf, zwischen dem und dem Kunststoffgehäuse 2 eine Platte 12 angeordnet ist.

Die aus Metall gefertigte Platte 12 dient als Verdrehsicherung für die Gewindebuchsen 7 und 8 und weist hierzu zwei Durchbrüche 13 und 14 auf, die jeweils von einer Gewindebuchse 7 bzw. 8 durchgriffen sind und jeweils vier Stützflächen 15 aufweisen, an denen korrespondierende am Umfang der Gewindebuchsen 7 und 8 ausgebildete und zwischen dem ringbundartigen Abschluß 10 bzw. 11 und dem Gehäuse 2 liegende, ebene Flächen 16 anliegen. Dadurch, daß einerseits die Gewindebuchse 7 in dem Durchbruch 13 und andererseits die Gewindebuchse 8 in dem Durchbruch 14 gegenüber der Platte 12 verdrehgesichert angeordnet ist, stützen sich die Gewindebuchsen 7 und 8 beim Eindrehen eines Anschlußstücks in die jeweilige Gewindebuchse 7 bzw. 8 aneinander ab. Das dabei auf die eine Gewindebuchse 7 bzw. 8 ausgeübte Drehmoment wird von der anderen Gewindebuchse 8 bzw. 7 aufgenommen, ohne daß sich die Gewindebuchse 7 bzw. 8 in der jeweils zugeordneten Ausnehmung 5 bzw. 6 verdrehen würde.

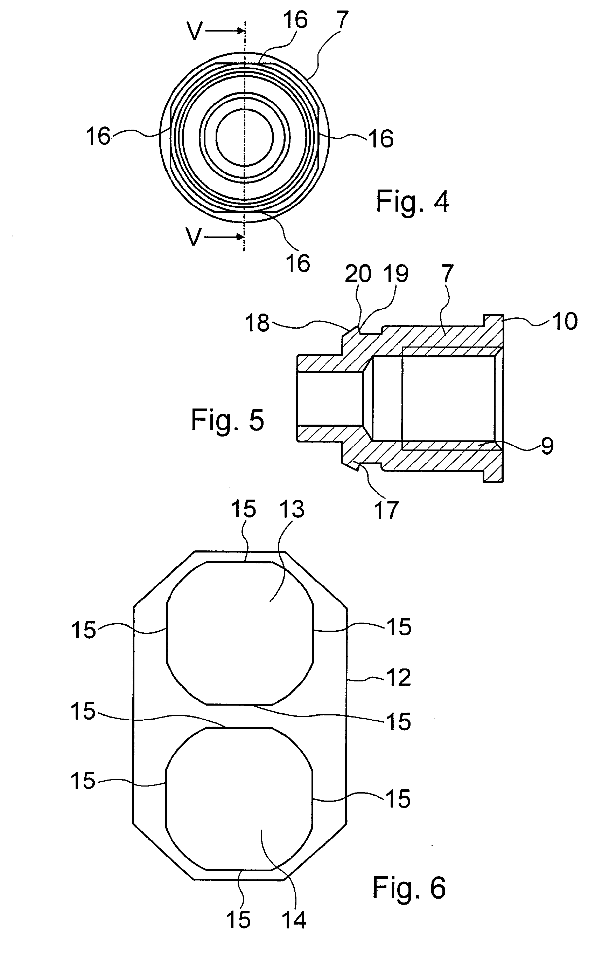

Des weiteren weisen die Gewindebuchsen 7 und 8, von denen die Gewindebuchse 7 in Figur 5 vergrößert dargestellt ist, jeweils einen zackenartigen Ringbund 17 auf, der in dem aus Kunststoff gefertigten Gehäuse 2 verhakt ist. Der Ringbund 17 hat eine sogenannte Einpreßschräge 18, die an der in Einpreßrichtung liegenden Flanke des Ringbundes 17 ausgebildet ist. An die Einfuhrschräge 18 schließt sich in der der Einpreßrichtung abgewandten Richtung über eine abgerundete Kante 20 eine im wesentlichen radial angeordnete Ringfläche 19 an. Der Ringbund 17 dient einerseits als Sicherung gegen ein Auspressen der Gewindebuchsen 7 und 8 und andererseits als Dichtung. Die Sicherung gegen Auspressen erfolgt im wesentlichen mittels der radial angeordneten Ringfläche 19.

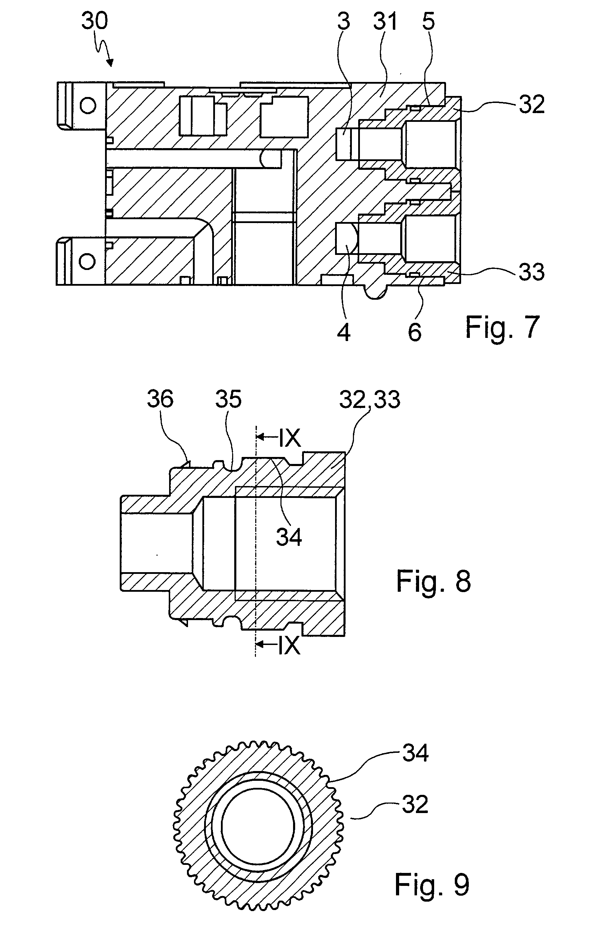

In den Figuren 7 bis 9 ist eine zweite Ausführungsform einer Adapterplatte 30 für ein Pneumatikventil dargestellt. Die Adapterplatte 30 umfaßt ein ebenfalls aus Kunststoff gefertigtes Gehäuse 31, dessen Aufbau im wesentlichen demjenigen des Gehäuses der Adapterplatte nach den Figuren 1 bis 6 entspricht und ebenfalls mit zwei Ausnehmungen 5 und 6 ausgebildet ist. In den Ausnehmungen 5 und 6 des Gehäuses 31 sind in diesem Fall zwei jeweils als Einpreßteil ausgebildete Gewindehülsen 32 und 33 angeordnet, welche mittels einer gerändelten Verzahnung 34 verdrehgesichert sind. Die gerändelte Verzahnung 34, die insbesondere den Figuren 8 und 9 zu entnehmen ist, ist am Umfang der Gewindehülsen 32 und 33 ausgebildet und greift in das Gehäuse 31 ein.

An die gerändelte Verzahnung 34 schließt sich in Einpreßrichtung eine Ringnut 35 an, die rillenartig ausgebildet ist und zur Aufnahme von beim Einpressen der Gewindebuchse 32 bzw. 33 anfallender Späne bzw. auftretendem Materialabrieb dient.

Des weiteren ist am Umfang der Gewindebuchsen 32 und 33 jeweils ein zackenförmiger Ringbund 36 ausgebildet, dessen Geometrie im wesentlichen derjenigen des Ringbundes 17 der Gewindebuchsen der Adapterplatte nach den Figuren 1 bis 6 entspricht und eine entsprechende Funktion hat.

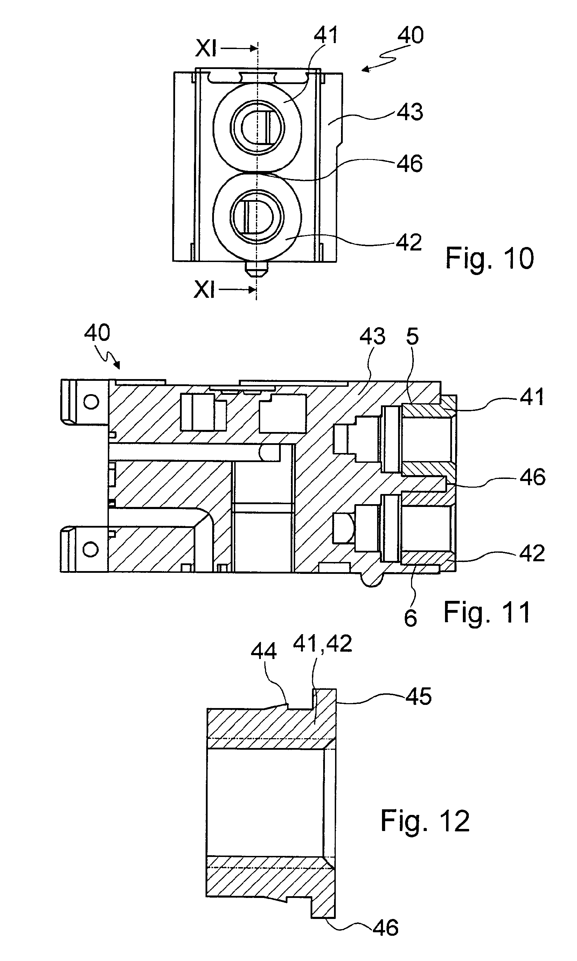

In den Figuren 10 bis 12 ist eine dritte Ausführungsform einer Adapterplatte 40 eines Pneumatikventils dargestellt. Der Aufbau der Adapterplatte 40 entspricht im wesentlichen demjenigen der vorstehend beschriebenen Adapterplatten und unterscheidet sich durch die Ausbildung zweier Gewindebuchsen 41 und 42, die in Ausnehmungen 5 und 6 eines aus Kunststoff gefertigten Gehäuses 43 angeordnet sind.

Am Umfang haben die Gewindebuchsen 41 und 42 jeweils einen Ringbund 44, dessen Geometrie ebenfalls derjenigen des Ringbundes 17 der Gewindebuchsen der Adapterplatte nach den Figuren 1 bis 6 entspricht und eine entsprechende Funktion hat.

Die Gewindehülsen 41 und 42 haben jeweils einen bundförmigen Abschluß 45, an dessen Umfang eine ebene Fläche 46 ausgebildet ist, welche sich an einer entsprechenden ebenen Fläche 46 der benachbarten Gewindehülse 41 bzw. 42 abstützt und so als Verdrehsicherung für die betreffende Gewindehülse beim Eindrehen eines Anschlußstückes in die jeweilige Gewindebuchse dient. Die Anordnung der beiden ebenen Flächen 46 der Gewindebuchsen 41 und 42 ist insbesondere Figur 10 zu entnehmen.

## Patentansprüche

1. Vorrichtung zum Anschluß mindestens einer pneumatischen Leitung an eine pneumatische Baueinheit, insbesondere an ein Pneumatikventil, mit mindestens einem in einen Aufnahmeraum (5, 6) angeordneten Einpreßteil (7, 8; 32, 33; 41, 41), welches einen sich in einem Anschlußgehäuseteil (2; 31; 43) verhakenden Ringbund (17; 36; 44) aufweist, **dadurch gekennzeichnet, daß** das Einpreßteil (7, 8; 32, 33; 41, 41) zum Anschluß einer Schraubverbindung ausgebildet ist sowie eine Verdrehsicherung (12; 34; 46) umfaßt.

2. Vorrichtung nach Anspruch 1, **dadurch gekennzeichnet, daß** die Verdrehsicherung einen gerändelten Umfang (34) des Einpreßteils (32; 33) umfaßt.

3. Vorrichtung nach Anspruch 1 oder 2, **dadurch gekennzeichnet, daß** die Verdrehsicherung eine am Umfang des Einpreßteils (32, 33; 41, 42) ausgebildete, ebene Fläche (16; 46) umfaßt, die an einer korrespondierenden Stützfläche (15; 46) anliegt.

4. Vorrichtung nach Anspruch 3, **dadurch gekennzeichnet, daß** die korrespondierende Stützfläche (46) an einem zweiten Einpreßteil (41, 42) ausgebildet ist.

5. Vorrichtung nach einem der Ansprüche 1 bis 4, **gekennzeichnet durch** zwei Einpreßteile (10, 11), die mittels einer Platte (12) verdrehgesichert sind, welche zwei von jeweils einem Einpreßteil (10, 11) durchgriffenen Durchbrüche (13, 14) hat, an welchen jeweils mindestens eine Stützfläche (15) für eine korrespondierende Anlagefläche (16) des jeweiligen Einpreßteils (10, 11) ausgebildet ist, so daß jeweils das eine Einpreßteil (10, 11) mittels des anderen Einpreßteils (10, 11) verdrehgesichert ist.

6. Vorrichtung nach einem der Ansprüche 1 bis 5, **dadurch gekennzeichnet, daß** der mindestens eine Ringbund (17; 36; 44) eine Einpreßschräge (18) aufweist.

7. Vorrichtung nach einem der Ansprüche 1 bis 6, **dadurch gekennzeichnet, daß** der mindestens eine Ringbund (17; 36; 44) an der der Einpreßrichtung abgewandten Seite eine radial ausgerichtete Ringfläche (19) hat.

8. Vorrichtung nach Anspruch 7, **gekennzeichnet durch** eine abgerundete Kante (20), die einen Übergang zwischen der Einpreßschräge (18) und der radial ausgerichteten Ringfläche (19) bildet.

9. Vorrichtung nach einem der Ansprüche 1 bis 8, **dadurch gekennzeichnet, daß** das Einpreßteil (10, 11; 32, 33; 41, 42) aus Messing gefertigt ist.

10. Vorrichtung nach einem der Ansprüche 1 bis 9, **dadurch gekennzeichnet, daß** das Anschlußgehäuseteil (2; 31; 43) zumindest teilweise aus Kunststoff gefertigt ist.
